# EUROPÄISCHE PATENTANMELDUNG

(11) **EP 4 516 506 A1**
(43) Veröffentlichungstag der Anmeldung: **05.03.2025**
(21) Anmeldenummer: 23194316.8
(22) Anmeldetag: 30.08.2023
(51) Int. Cl.: B33Y 80/00, H02K 1/02, H02K 1/24, H02K 15/02

(54) **MAGNETBLECHHALBZEUG, MAGNETBLECH, ROTOR FÜR EINE ELEKTRISCHE MASCHINE UND ELEKTRISCHE MASCHINE**

(71) Anmelder: Siemens Aktiengesellschaft, 80333 München (DE)
(72) Erfinder: Steinkopff, Thorsten, 85586 Poing (DE); Rieger, Gotthard, 80636 München (DE); Vollmer, Rolf, 36129 Gersfeld (DE)
(74) Vertreter: Siemens Patent Attorneys

(57) **Zusammenfassung**

Die Erfindung betrifft ein Halbzeug eines rotationssymmetrischen Magnetblechs für einen Rotor einer elektrischen Maschine,
- das aus mindestens zwei Materialkomponenten zusammengesetzt ist,
- einer ersten Materialkomponente, die einen magnetischen Werkstoff umfasst und
- einer zweiten Materialkomponente die einen amagnetischen Werkstoff umfasst,
- wobei die zweite Materialkomponente diametral entlang einer Achse, einer sogenannten d-Achse verläuft, wobei mindestens zwei dieser d-Achsen vorgesehen sind,
- die wiederum mindestens vier magnetische Bereiche einschließen, die jeweils durch die magnetische erste Materialkomponente ausgebildet sind,
- die bezüglich eines Magnetblechmittelpunktes konkav bogenförmig verlaufen,
dadurch gekennzeichnet, dass
- radial außerhalb der magnetischen Bereiche liegende Flächen (3) ebenfalls durch das amagnetische Material gebildet sind und
- dass das Magnetblechhalbzeug von einem ringförmig geschlossenen Bereich (5) aus amagnetischen Material umgeben ist.

## Beschreibung

Die Erfindung betrifft ein Magnetblechhalbzeug nach dem Patentanspruch 1, ein Magnetblech nach Patentanspruch 14, ein Rotor nach Patentanspruch 15 sowie eine elektrische Maschine nach Patentanspruch 16.

Ein neues Verfahren zur Herstellung von Magnetblechen für elektrische Maschinen stellt der Sieb- oder der Schablonendruck dar. Dies kann als additives Herstellungsverfahren angesehen werden. Hierbei wird mittels einer Schablone, bei der die offenen Bereiche auch mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3 932 591 A1 beschrieben. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 x 10⁻⁶ K⁻¹. Ein weiterer weichmagnetischer niedriglegierter Stahl hat dabei in einer Temperaturspanne zwischen 0 und 100° C einen thermischen Ausdehnungskoeffizienten, der zwischen 10 - 12 × 10⁻⁶ K⁻¹ liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Eine typische elektrische Maschine in Form eines Reluktanzmotors, bei dem der Rotor aus einkomponentigen Magnetblechen aufgebaut ist in der EP 2 790 296 A1 beschrieben. Solche Aufbauten stellen stets einen Werkstoff-Kompromiss zwischen hoher Festigkeit und guten magnetischen Eigenschaften des Magnetblechmaterials dar. Insbesondere kommt es aber stets zu magnetischen Streuflüssen zwischen den einzelnen magnetischen Polen, die die Leistungsfähigkeit des Motors reduzieren.

Die Aufgabe der Erfindung besteht darin, ein Halbzeug für ein Magnetblech sowie ein Magnetblech, sowie einen Rotor für eine elektrische Maschine und eine elektrische Maschine bereitzustellen, bei denen das Magnetblechhalbzeug (sog. Blechpaket) und das Magnetblech gegenüber dem Stand der Technik bei Anwendung von mindestens zwei Materialkomponenten innerhalb des Magnetblechs eine höhere Festigkeit sowie weniger intrinsische Spannungen, insbesondere an den Grenzlinien der Materialien und im Stapel aufweist.

Die Lösung der Aufgabe besteht in einem Magnetblech-Halbzeug nach Patentanspruch 1, einem Magnetblech nach Patentanspruch 14, einem Rotor nach Patentanspruch 15 sowie einer elektrischen Maschine nach Patentanspruch 16.

Das Halbzeug eines rotationssymmetrischen Magnetblechs gemäß Patentanspruch 1 für einen Rotor einer elektrischen Maschine umfasst mindestens zwei Materialkomponenten, wobei eine erste Materialkomponente einen magnetischen Werkstoff umfasst und eine zweite Materialkomponente einen amagnetischen Werkstoff umfasst. Dabei verläuft die zweite Materialkomponente in einer Draufsicht auf einer Topografie des Magnetblechs diametral einer Achse, die radial durch den Mittelpunkt des rotationssymmetrischen Halbzeugs verläuft und die in der elektrotechnischen Beschreibung von elektrischen Maschinen auch als d-Achse bezeichnet wird, und wobei von diesen d-Achsen mindestens zwei vorgesehen sind. Diese zwei d-Achsen sind so angeordnet, dass zwischen ihnen mindestens vier magnetische Bereiche verlaufen. Diese magnetischen Bereiche sind wiederum durch die magnetische erste Materialkomponente ausgebildet. Die magnetischen Bereiche sind so ausgestaltet, dass sie bezüglich eines Magnetblechmittelpunktes konkav bogenförmig verlaufen. Das Magnetblech-Halbzeug zeichnet sich dadurch aus, dass radial außerhalb der magnetische Bereiche liegende Flächen ebenfalls durch das amagnetische Material gebildet sind und dass das Magnetblech-Halbzeug von einem ringförmig geschlossenen Bereich aus amagnetischem Material umgeben ist.

Der Vorteil gegenüber einem herkömmlichen, mindestens zweikomponentigen Magnetblech aus dem Stand der Technik besteht darin, dass insbesondere der ringförmig geschlossene Bereich des Halbzeuges während des Sinterprozesses und vor allen Dingen während des Abkühlvorganges ausgehend von der Sintertemperatur eine klammernde Wirkung für das gesamte rotationssymmetrische Halbzeug bewirkt und somit zwischen Grenzflächen zwischen den einzelnen Materialkomponenten eine verbindende Wirkung ausübt. Die beschriebene nachteilige Wirkung der unterschiedlichen Ausdehnungskoeffizienten der beiden Materialkomponenten wird durch den klammernden, ringförmig geschlossenen Bereich minimiert. Die besondere klammernde Wirkung des ringförmig geschlossenen Bereiches wird noch dadurch unterstützt, dass die radial außerhalb der magnetischen Bereiche liegenden Flächen ebenfalls durch das amagnetische Material ausgebildet sind und somit das rotationssymmetrische Halbzeug eines Magnetbleches kreisförmig vollständig ausgefüllt ist. Wären hier, wie dies im Stand der Technik üblich ist, linsenförmige Aussparungen, die die konkave Abbildung der magnetischen Bereiche, so würde der ringförmige Bereich sine Klammerwirkung nur unzureichend ausfüllen können. Ferner bewirken diese linsenförmigen, radial außenliegenden Bereiche, während der Rotation eines Rotors (der aus den Magnetblechen bzw. Magnetblech-Halbzeugen aufgebaut ist und Bestandteil des Patenanspruchs 15 ist) einen geringeren Luftwiderstand, welches wiederum den Drehwiderstand des Rotors erniedrigt und auch zu einer gewissen Geräuschreduktion beiträgt.

Bezüglich des Patentanspruchs 1 wird von einem Halbzeug gesprochen, da der ringförmig geschlossene Bereich während der Herstellung des Magnetblechs die beschriebene klammernde Wirkung aufweist. Dieser ist jedoch kein funktionaler Bestandteil des Magnetblechs. Dieser ringförmig geschlossene Bereich muss in der Zusammensetzung der Vielzahl der Magnetbleche zu einem Blechpaket, das wiederum Bestandteil des Rotors ist, entfernt werden. Dieser geschlossene Bereich kann von dem Halbzeug beispielsweise durch Ausstanzen nach dem Sinterprozess entfernt werden, sodass die magnetischen Bereiche, die im späteren Rotor die magnetischen Pole darstellen, am Umfang des Magnetblechs unverdeckt vorliegen. Das Abtrennen des ringförmig geschlossenen Bereiches kann jedoch auch nach dem Stapeln der einzelnen Halbzeuge zu einem Blechpaket und nach dem Verbinden mit der Welle zu einem Rotor durch ein Abdrehen gemeinschaftlich für die gesamte Anzahl der Halbzeuge erfolgen. Dieser Übergang von einem Magnetblech-Halbzeug zum Magnetblech ist gemäß Patentanspruch 14 Teil der Erfindung.

Dabei seien die in den Ansprüchen verwendeten Begriffe wie folgt definiert: Das Magnetblech ist, wie bereits erwähnt, ein ebenes Gebilde, das durch ein additives Verfahren, insbesondere ein Sieb- oder Schablonendruckverfahren oder auch durch ein Tape Casting-Verfahren sehr dünn hergestellt wird. Es hat dabei üblicherweise eine Dicke zwischen 80 µm und 200 µm. Die hierzu benannte d-Achse verläuft somit in der ebenen Fläche des Magnetbleches durch dessen Mittelpunkt. Das beschriebene Magnetblech ist aus mindestens zwei Materialkomponenten aufgebaut, wobei die erste Materialkomponente einen magnetischen Werkstoff, insbesondere einen weichmagnetischen Werkstoff umfasst. Ein weichmagnetischer Werkstoff zeichnet sich dadurch aus, dass elementare Magnetisierungsprozesse sowie Wandverschiebungen und Drehprozesse der einzelnen Domänen und Körner leicht und ungehemmt ablaufen. Dies führt dazu, dass der magnetische Werkstoff leicht auf- und ummagnetisiert werden kann. Dies steht im Gegensatz zu hartmagnetischen Werkstoffen, die sich durch eine hohe Koerzitivfeldstärke und eine ausgeprägte Hystereseschleife auszeichnen. Weichmagnetische Werkstoffe, die ihre Polarisierung bereits durch geringe Magnetfelder erhalten oder ändern können, sind insbesondere in Rotoren von Reluktanzmotoren, die keine zusätzlichen Wicklungen oder Dauermagneten aufweisen, von Vorteil.

Amagnetische oder nicht magnetische Werkstoffe sind insbesondere Werkstoffe, die nicht ferromagnetisch sind. Sie können paramagnetisch oder diamagnetisch sein. Es hat sich zur Definition der Größe insbesondere in Stählen als vorteilhaft herausgestellt, dass die Sättigungsmagnetisierung des amagnetischen bzw. nicht magnetischen Werkstoffs der zweiten Materialkomponenten weniger als 10 % der Sättigungsmagnetisierung des magnetischen Werkstoffs der ersten Materialkomponente beträgt. Insbesondere sollte diese nicht mehr als 5 % der Sättigungsmagnetisierung der ersten Materialkomponente betragen.

Die Grenze zwischen den beiden Materialkomponenten erscheint bei einer Draufsicht auf das Magnetblech als Linie und wird somit als Grenzlinie bezeichnet. Die Höhe der Grenzlinie entspricht der Höhe des Magnetblechs, bevorzugt zwischen 80 µm und 200 µm. Die Grenzlinie ist dabei herstellungsbedingt (auf was noch eingegangen wird) keine diskrete Linie, vielmehr handelt es sich um eine Zone, in der die unterschiedlichen Materialkomponenten aufeinandertreffen und miteinander aufgrund diffusionsinduzierter Prozesse während des Sintervorgangs miteinander verbunden sind. Somit weist die Grenzlinie die Breite einer Diffusionszone auf, die je nach Materialien bis zu einem mm betragen kann.

Der Vorteil der vorliegenden Erfindung gegenüber herkömmlichen einkomponentigen Magnetblechen und den daraus erstellen Rotoren bzw. elektrischen Maschinen besteht darin, dass die amagnetische Materialkomponente entlang der beschriebenen d-Achsen die Bildung von Streuflüssen zwischen den einzelnen magnetischen Bereichen minimiert. Derartige Streuflüsse finden in herkömmlichen Monomaterialien, die zur Bildung der Rotoren nach dem Stand der Technik hauptsächlich herangezogen werden, immer statt. Sie können zwar durch konstruktive Merkmale reduziert werden, eine Minimierung, wie sie durch den beschriebenen zweikomponentigen Aufbau mit dem amagnetischen Werkstoff erfolgt, ist jedoch mit einem Monomaterial nicht zu realisieren. Dort werden magnetische Streuflüsse immer durch das weichmagnetische Material geführt und sind nicht zu vermeiden. Durch die beschriebene Maßnahme ist es möglich, in elektrischen Maschinen der beschriebenen Art, insbesondere bei Reluktanzmotoren das maximale Drehmoment am Motor erheblich zu erhöhen.

Es kann zweckmäßig sein, dass der Aufbau des Rotors und somit des Magnetblechs und des Magnetblech-Halbzeugs eine Vielzahl von magnetischen Bereichen aufweist, wobei die Anzahl der magnetischen Bereiche 2 x n der Anzahl der Achsen beträgt, wobei n eine natürliche Zahl ist. Es handelt sich somit immer um eine geradzahlige Anzahl von magnetischen Bereichen, die bei bestimmten Motoraufbauten auch durchaus weit über 100 liegen kann.

In einer weiteren Ausgestaltungsform der Erfindung weist das Halbzeug eine zentrale Wellenbohrung auf, wobei die Wellenbohrung durchgehend von einem amagnetischen Material umgeben ist. Dies dient insbesondere der zentralen Festigkeit des Magnetmaterials, da das amagnetische Material, wie noch näher beschrieben werden wird, eine höhere mechanische Festigkeit aufweist. Somit ist durch diese Maßnahme insbesondere entlang der Wellenbohrung und der darin enthaltenen Drehwelle des Rotors eine hohe mechanische Festigkeit gewährleistet. Dies unterscheidet das erfindungsgemäße Magnetblech und den daraus entstehenden Rotor von einem Monomaterial-Rotor, wie er im Stand der Technik üblich ist.

Es ist üblich, dass die Winkelhalbierenden zweier benachbarter d-Achsen als q-Achsen bezeichnet sind. Die weichmagnetischen Bereiche sind in einer vorteilhaften Ausgestaltungsform symmetrisch zu den q-Achsen, und zwar konkav zum Mittelpunkt des Magnetblechs bzw. Magnetblech-Halbzeuges ausgestaltet. Durch diese geometrische Ausgestaltung wird der Magnetfluss durch magnetischen Bereich für die Rotationsbewegung optimal gelenkt. Auch die q-Achsen verlaufen radial durch den Mittelpunkt des Halbzeugs.

Die ringförmig geschlossenen Bereiche, die das Halbzeug umschließen, können unterschiedliche Dicken aufweisen. So ist es ggf. zweckmäßig, dass die geschlossenen Bereiche am Schnittpunkt mit den q-Achsen eine größere Dicke aufweisen als am Schnittpunkt mit den d-Achsen. Dies kann daher zweckmäßig sein, da an bestimmten Stellen im Umfang des Halbzeuges höhere Spannungen aufgrund des Sinterprozesses während des Abkühlens aus der Sintertemperatur auftreten und somit lokal entlang des Umfangs des Halbzeuges höhere Dicken geboten sind.

Der beschriebene ringförmig geschlossene Bereich des Halbzeuges dient insbesondere bei der Abkühlung aus der Sintertemperatur als Klammer, die die auftretenden thermischen Spannungen durch ihre ringförmige Krafteinwirkung kompensiert. Andere thermische Spannungen bzw. mechanische Spannungen, die in dem Magnetblech auftreten können, sind Spannungen während des Betriebs des Magnetblechs in seiner Funktion als Bestandteil des Rotors. Hier können ebenfalls Temperaturen von über 100° C auftreten, was ebenfalls erhebliche thermische Spannungen an Grenzlinien zwischen dem magnetischen Bereich der ersten Komponenten und dem amagnetischen Bereich der zweiten Komponente hervorrufen kann. Für die Kompensation dieser thermisch induzierten mechanischen Spannungen ist es zudem zweckmäßig, dass Entlastungsaussparungen vorgesehen sind, die von der d-Achse geschnitten werden und zu dieser symmetrisch sind. Diese Erkenntnis ist aufgrund von Simulationsberechnungen entstanden, die mechanische und thermische Spannungen im Bereich dieser Materialgrenzen beschreiben und die aufgrund der beschriebenen Entlastungsaussparungen an den Materialgrenzen minimiert werden.

In einer weiteren Ausgestaltungsform der Erfindung ist die erste Materialkomponente eine Eisenlegierung, die mindestens 95 Gew.-%, insbesondere mindestens 97 Gew.-% und ganz besonders bevorzugt mindestens 99 Gew.-% Eisen aufweist. Im Idealfall handelt es sich dabei um Reineisen, da Reineisen die beste ferritische Gefügestruktur oder martensitische Gefügestruktur aufweist und dabei sehr gute weichmagnetische Eigenschaften umfasst, die für die jeweilige Auf- und Ummagnetisierung bei einer elektrischen Maschine vorteilhaft sind.

Die zweite, amagnetische Materialkomponente umfasst eine Eisen-Chrom-Legierung, die auch eine mechanisch tragende Materialkomponente darstellt. Diese weist bevorzugt einen Chromanteil zwischen 10 Gew. % und 20 Gew. %, insbesondere zwischen 12 Gew. % und 18 Gew. % auf. Das Chrom ist dabei ein Ferritbildner, der bei einer entsprechenden Abkühlung aus dem Sinterprozess die Ausbildung von Ferritkristallen begünstigt.

Ferner weist die Legierung einen Nickelanteil auf, der zwischen 4 Gew. % und 10 Gew. % beträgt, insbesondere zwischen 6 Gew.% und 8 Gew.%. Nickel ist ein sogenannter Austenitbildner, der bei der Abkühlung eine austenitischen Phasenbestandteile begünstigt. Beide Phasenbestandteile, Austenit und Ferrit, sind bevorzugte Bestandteile im Gleichgewicht der zweiten Materialkomponente, da durch die beschriebenen Verhältnisse sowohl mechanische Festigkeiten als auch weichmagnetisches Verhalten verhindert wird. Derartige Chrom-Nickel-Stähle, die auch als Duplex-Stähle bekannt sind, weisen neben einer hohen Zugfestigkeit auch eine verhältnismäßig hohe Duktilität auf, weshalb sie besonders gut als tragende Komponente für das beschriebene Magnetblech geeignet sind.

Ferner umfasst die Eisen-Chrom-Legierung in vorteilhaften Ausgestaltungsformen sowohl Molybdän in Anteilen zwischen 2 Gew. % und 5 Gew. %, insbesondere zwischen 3 Gew. % und 4 Gew. %. Der Anteil an Wolfram beträgt bevorzugt zwischen 0,3 Gew. % und 1,2 Gew. %, insbesondere zwischen 0,5 Gew.% und 1 Gew.%. Die beiden zuletzt genannten Legierungsbestandteile Molybdän und Wolfram tragen zum einen zu einer höheren Festigkeit der Legierung bei, zum anderen sind sie dazu geeignet, insbesondere den gewünschten Ausdehnungskoeffizienten, der nahe an den der magnetischen Komponente liegt, einzustellen.

Neben dem beschriebenen Halbzeug ist zudem, wie bereits beschrieben, ein Magnetblech mit abgetrenntem, ringförmig geschlossenem Bereich Teil der Erfindung, das wiederum ein Bestandteil eines Rotors einer elektrischen Maschine ist, wobei dieses Magnetblech zu einem Stapel von Magnetblechen gestapelt ist. Ein weiterer Bestandteil der Erfindung ist eine elektrische Maschine, die einen Rotor nach Anspruch 15 umfasst, wobei diese elektrische Maschine in einer besonderen Ausgestaltungsform der Erfindung ein Reluktanzmotor ist.

Weitere Ausgestaltungsformen und weitere Merkmale der Erfindung werden anhand der folgenden Figuren näher erläutert. Dabei handelt es sich lediglich um schematische Ausgestaltungsformen, die keine Einschränkung des Schutzbereichs darstellen. Merkmale, die den Stand der Technik beschreiben und dieselbe Bezeichnung haben, wie sie auch im Bezug auf die Erfindung verwendet werden, sind mit einem Hochstrich versehen.

### Dabei zeigen:

- Figur 1: eine schematische Draufsicht auf ein zweikomponentiges Magnetblech nach dem Stand der Technik,
- Figur 2: eine Simulationsdarstellung von auftretenden mechanischen Spannungen in einem Zweikomponenten-Magnetblech nach dem Stand der Technik,
- Figur 3: ein Halbzeug eines zweikomponentigen Magnetblechs mit einem ringförmig umlaufenden geschlossenen Bereich mit Klammerwirkung,
- Figur 4: ein aus der Figur abgeleitetes Magnetblech mit Entlastungsaussparungen,
- Figur 5: ein Magnetblech analog zu Figur 4 mit einer anderen Ausgestaltung von Entlastungsaussparungen,
- Figur 6: eine Darstellung der mechanischen Spannungen analog Figur 2 nach Wirkung der Entlastungsaussparungen,
- Figur 7: ein Blechpaket bzw. einen Magnetblechstapel einer Vielzahl von Magnetblechen aus einer der vorhergehenden Zeichnungen,
- Figur 8: einen Querschnitt durch einen Rotor mit einem Blechpaket,
- Figur 9: eine schematische Darstellung der Herstellung eines zweikomponentigen Magnetbleches.

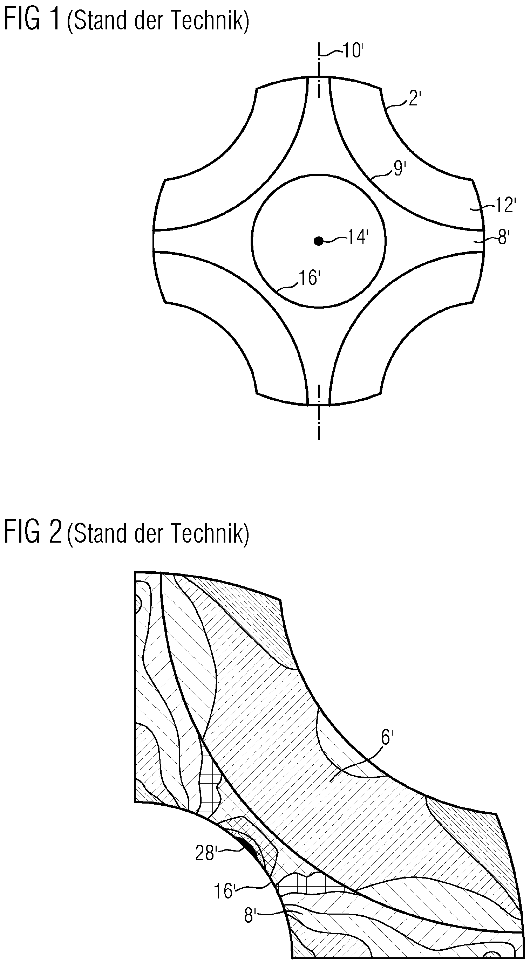

In Figur 1 ist ein herkömmliches Magnetblech 2' aus dem Stand der Technik dargestellt. Dieses Magnetblech 2' ist insbesondere für einen Reluktanzmotor geeignet und weist dabei zwei Materialkomponenten auf: eine erste Materialkomponente 6' und eine zweite Materialkomponente 8`. Ferner ist eine Wellenbohrung 16' vorgesehen, die um einen Mittelpunkt 14' des rotationssymmetrischen Magnetblechs 2' verläuft.

In Figur 2 ist eine Simulationsdarstellung von mechanischen Spannungen des Magnetblechs 2' gemäß des Standes der Technik aus Figur 1 dargestellt. Es sind die Materialbereiche 6' aus magnetischem Material und 8` aus amagnetischem Material dargestellt und es ist zu erkennen, dass im Bereich der Wellenbohrung 16' erhebliche mechanische Spannungen 28` auftreten, die bei einer mechanischen Belastung des Magnetblechs 2' während des Betriebs zu einem Bruch oder einer Aufwölbung des Magnetblechs 2' führen können.

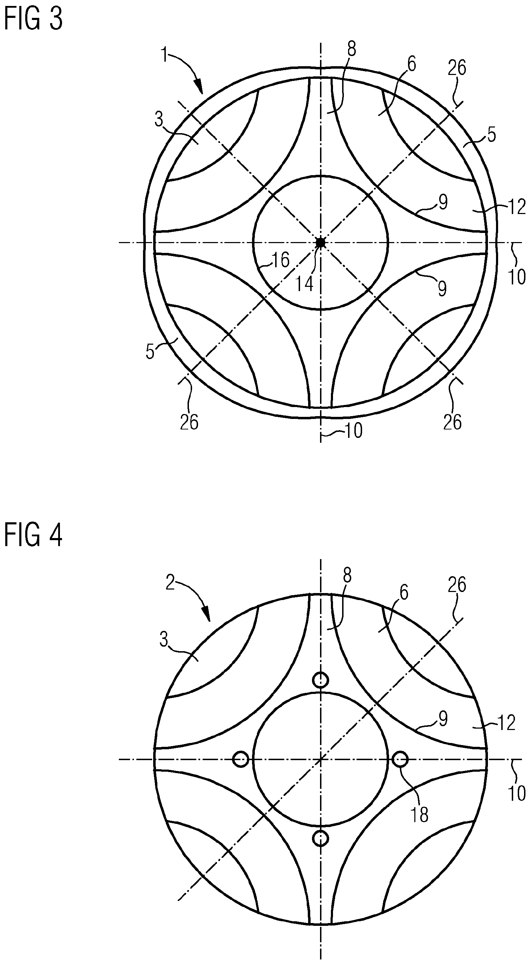

In Figur 3 ist ein Magnetblech-Halbzeug 1 dargestellt, das ebenfalls zwei Materialkomponenten aufweist: eine erste Materialkomponente 6 und eine zweite Materialkomponente 8. Dabei handelt es sich bei der ersten Materialkomponente 6 um einen magnetischen Werkstoff, der aus 99 Gew.-% Eisen besteht. Ein derartiger Eisen-Werkstoff hat eine sehr gute Sättigungsmagnetisierung bei einem ferritischen Gefüge und hat dabei sehr gute weichmagnetische Eigenschaften, d. h. je nach magnetischer Induktion aus dem Stator der elektrischen Maschine lässt sich das Material der ersten Materialkomponente 6 leicht ummagnetisieren.

Ferner umfasst das Magnetblech-Halbzeug 1 einen amagnetischen Bereich, der in einer zweiten Materialkomponente 8 vorliegt. Dabei handelt es sich um eine Eisen-Chrom-Legierung mit einem Chromanteil von 10 Gew.-% bis 18 Gew.-% gegebenenfalls bis 28 Gew.-%, die ferner einen Nickelanteil zwischen 6 und 8 Gew.-% aufweist. Nickelanteile unter 18 Gew.-% haben sich für den Sinterprozess als vorteilhafter herausgestellt. Es handelt sich dabei um einen austenitischen Edelstahl, der eine besonders hohe Festigkeit aufweist. Daher liegt diese amagnetische Materialkomponente 8 insbesondere entlang von sogenannten d-Achsen 10 vor, die wiederum magnetische Bereiche 12 die die erste Materialkomponente 6 umfassen, einschließen. Die amagnetischen Bereiche mit der zweiten Materialkomponente 8 bilden somit eine mechanisch tragende Grundstruktur des Magnetblech-Halbzeuges 1 bzw. des weiteren Magnetblechs 2, die insbesondere bei hohen Rotationsgeschwindigkeiten die mechanische Festigkeit des Magnetblechs 2 gewährleistet.

Ein weiterer Vorteil dieser konstruktiven Anordnung der amagnetischen Bereiche 8, die die magnetischen Bereiche 12 einschließen, liegt darin, dass, wie bereits erwähnt, Streuflüsse durch die magnetische Komponente 6, wie dies bei Monomaterialien unweigerlich der Fall ist, vermieden werden. Daraus resultiert ein geringerer Drehwiderstand des Rotors und ein höheres Drehmoment, was in der praktischen Anwendung einer elektrischen Maschine von erheblicher Bedeutung ist. Der Wirkungsgrad der elektrischen Maschine wird dadurch erhöht.

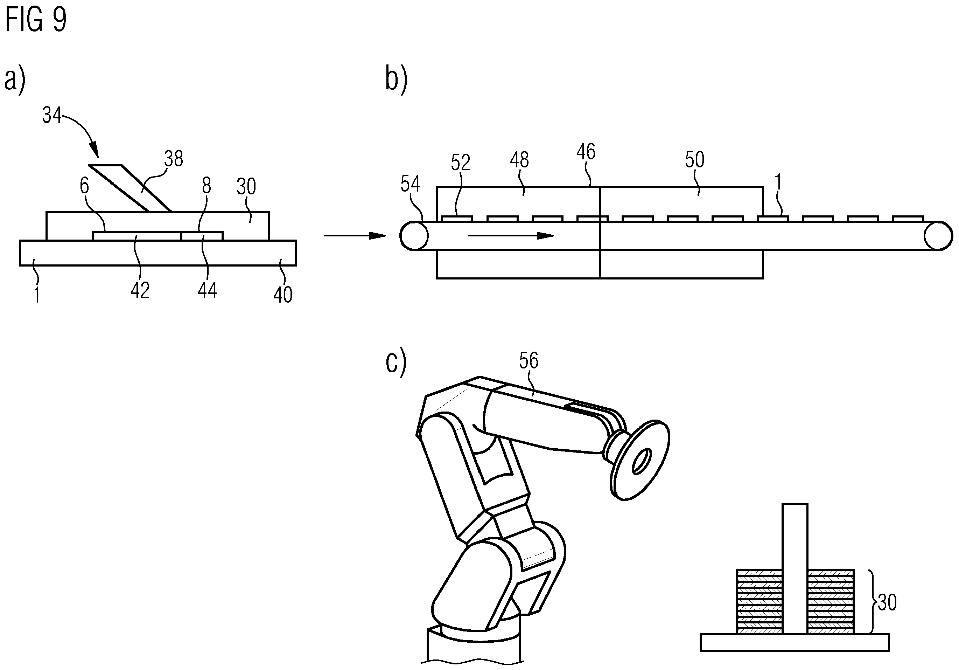

Gegenüber dem Zweikomponentenblech nach dem Stand der Technik weist das Magnetblech-Halbzeug 1 gemäß der Figur 3 noch zwei weitere zusätzliche Merkmale auf. Zum einen sind Bereiche 3 vorgesehen, die bezüglich der magnetischen Bereiche 12 radial außen liegen. Diese Bereiche 3 sind so geformt, dass sie das Magnetblech-Halbzeug 1 und das spätere Magnetblech 2 zu einer vollständigen Kreisform ausfüllen. Diese Bereiche 3 haben gegenüber einem Magnetblech 2` nach dem Stand der Technik den Vorteil, dass bei der Rotation des späteren Rotors 4 der Luftwiderstand reduziert wird. Andererseits dienen sie auch als Füllmaterial für einen zusätzlichen ringförmig geschlossenen Bereich 5, der um das gesamte Magnetblech-Halbzeug 1 herum angeordnet ist. Auf die Art der Herstellung des Magnetblech-Halbzeugs wird noch bezüglich Figur 9 näher eingegangen werden. Die Bereiche 3 füllen dabei etwaige Leerräume zwischen den magnetischen Bereichen 12 und dem ringförmigen Bereich 5 aus, weshalb die Wirkung des ringförmigen Bereiches 5 noch verstärkt wird.

Der ringförmige Bereich 5 wirkt in der Anordnung, wie sie in Figur 3 veranschaulicht ist, wie eine Klammer, die sich beim Abkühlen aus der Sintertemperatur zusammenzieht und somit die einzelnen Komponenten 6 und 8 des Magnetblech-Halbzeugs in der Fläche zusammendrückt. Auf diese Weise werden auch Grenzlinien 9 verfestigt und gegenüber einer Rissbildung, die sich insbesondere durch die unterschiedlichen Temperaturausdehnungskoeffizienten der einzelnen Materialkomponenten ergeben, wirkt. Dabei wirkt der ringförmige Bereich 5 ähnlich wie ein Spannring um ein Holzfass, der dort bei der Herstellung erhitzt aufgebracht wird und sich beim Abkühlen zusammenzieht. Da die enormen thermischen Spannungen auf die Grenzlinien 9 bei der Abkühlung auf Raumtemperatur aus der Sintertemperatur, die beispielsweise 900° C beträgt, besonders hoch sind und sich nach dem Abkühlen dann in einen Gleichgewichtszustand einstellen, ist die klammernde Wirkung des ringförmigen Bereichs 5 nach der Abkühlung nicht mehr nötig. Somit kann der ringförmige Bereich 5 des Halbzeuges 1 nach dem Sinterprozess entfernt werden. Er sollte auch entfernt werden, da die magnetischen Bereiche 12 in ihren Endbereichen die radiale Außenfläche des dann fertiggestellten Magnetblechs 2 erreichen sollen. Dies hat magnetische Gründe, da der amagnetische ringförmige Bereich 5 den magnetischen Fluss und die Induktion der magnetischen Bereiche 12 abschirmen würde. Aus diesem Grund wird bei dem Gebilde gemäß Figur 3 von einem Magnetblech-Halbzeug 1 gesprochen. Bei dem Gebilde gemäß Figur 4, bei dem nun der ringförmige Bereich 5 abgetrennt ist, wird vom Magnetblech 2 gesprochen.

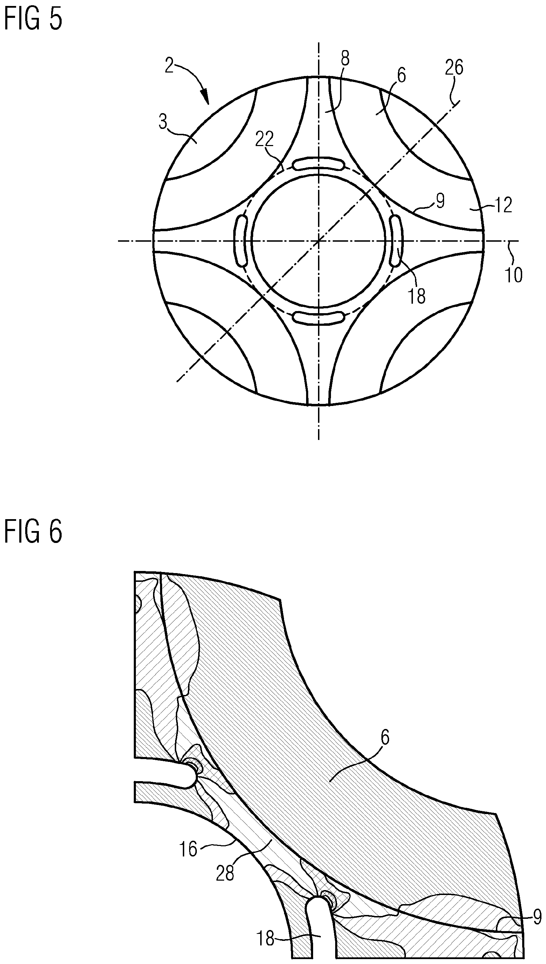

Der ringförmige Bereich 5 wirkt also ausschließlich bei der sehr hohen Temperaturveränderung von der Sintertemperatur auf die Raumtemperatur, die etwa 900° C beträgt. Derartige Temperaturunterschiede treten naturgemäß bei der bestimmungsgemäßen Verwendung des Magnetblechs in einer elektrischen Maschine nicht auf. Hier treten allerdings Temperaturgradienten von etwa 100° C bei einer sehr hohen Belastung des Rotors auf. Somit ist es zweckmäßig, ggf. weitere Maßnahmen zur Entlastung von Spannungen 28 an den Grenzlinien 9 zu ergreifen. Simulationsberechnungen der mechanischen und thermischen Spannungen 28 in dem Magnetblech 2 haben ergeben, dass Entlastungsaussparungen 18, die auf der d-Achse liegen und zu dieser symmetrisch sind, erheblich reduzieren können. Dies ist schematisch in Figur 6 wiedergegeben, in der zu erkennen ist, dass die Spannungen 28 dort wesentlich geringer sind und homogener verteilt sind, als dies gemäß dem Stand der Technik in Figur 2 gezeigt ist.

In Figur 6 ist das Spannungsbild eines Magnetblechs 2 gemäß Figur 5 gezeigt, das ebenfalls Entlastungsaussparungen 18 aufweist, die symmetrisch zu der d-Achse angeordnet sind, die jedoch in Form von Ringsegmenten ausgestaltet sind, wobei diese ringsegmentförmigen Entlastungsaussparungen 18 auf einem bezüglich der Wellenbohrung 16 konzentrischen Kreis 22 liegen. Dieser konzentrische Kreis 22 tangiert dabei im Idealfall die Grenzlinie 9 zwischen dem amagnetischen Bereich 8 sowie den magnetischen Bereich 12. Es kann jedoch auch zweckmäßig sein, diesen konzentrischen Kreis 22 radial etwas zu vergrößern oder zu verkleinern, sodass der radiale Abstand von der Tangentensituation bis zu 5 % des Gesamtradius des Magnetblechs 2 ausmacht. In diesem Bereich haben sich die besten Ergebnisse zur Reduktion der Spannungen 28 an der Grenzlinie 9 durch eine Simulation errechnen lassen.

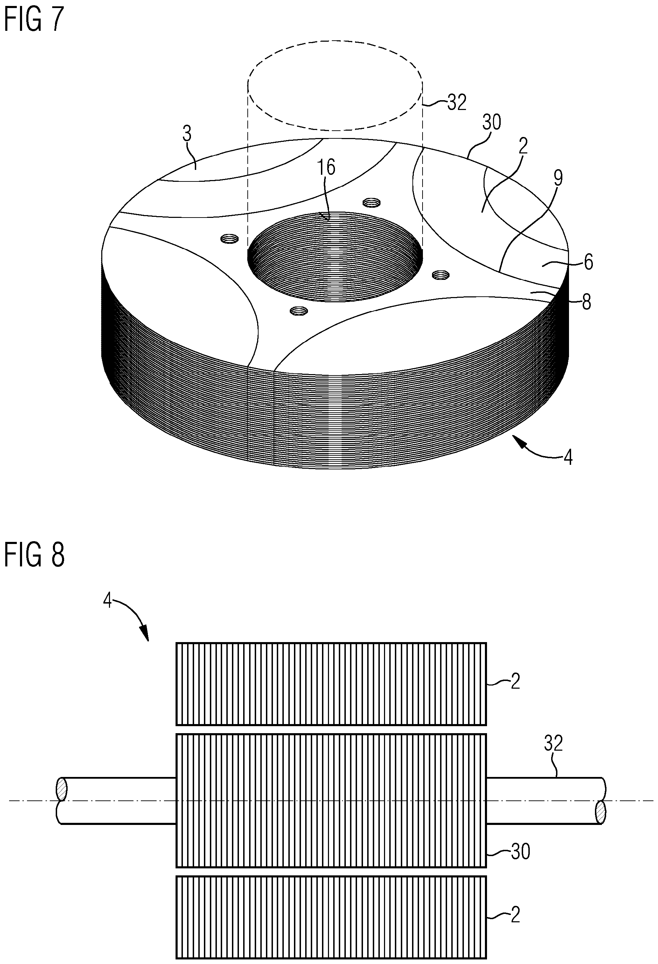

In Figur 7 ist der weitere Weg des Magnetblechs 2 zur Zusammensetzung zu einem Rotor 4 dargestellt. Die Magnetbleche 2 werden zu einem Blechpaket 30, also zu einem Magnetblechstapel, zusammengestapelt, wobei die hier nicht dargestellten Grenzflächen zwischen den Magnetblechen 2 durch eine elektrische Isolationsschicht, die beispielsweise auf die Magnetbleche 2 aufgesprüht wird, gegeneinander elektrisch isoliert werden. Es handelt sich bei Figur 7 um eine dreidimensionale vereinfachte Darstellung, die ebenfalls wie in Figuren 4 und 5 Entlastungsaussparungen 18 enthält, die in diesem Zusammenhang vorteilhaft, jedoch nicht zwingend erforderlich sind.

In einem weiteren Schritt gemäß Figur 8 wird dem Blechpaket 30 eine Welle 32 zugeführt, wobei es sich bei dieser Darstellung um eine Schnittdarstellung durch einen Rotor 4 für eine elektrische Maschine handelt. Insbesondere bei der dreidimensionalen Darstellung gemäß Figur 7 wird ein Blechpaket 30 bzw. ein Rotor 4 für einen Reluktanzmotor dargestellt.

Herkömmliche Monomaterial-Magnetbleche nach dem Stand der Technik werden bekannterweise durch Ausstanzen dieser Bleche aus einem Endlosblech-Material, einem gewalzten Blech, erzeugt. Es ist offensichtlich, dass ein Magnetblech 2 mit mindestens zwei Komponenten 6 und 8, wie es in den vorangegangenen Figuren beschrieben ist, sich über einen Ausstanz-Vorgang in dieser Form nicht darstellen lässt. Daher wird bezüglich Figur 9 auf einen typischen Herstellungsweg für ein beschriebenes Magnetblech 2 bzw. Magnetblech-Halbzeug 1 eingegangen.

Das beschriebene Magnetblech 2 wird durch ein additives Verfahren, insbesondere durch ein Schablonendruckverfahren, insbesondere ein Siebdruckverfahren, hergestellt. Hierbei wird eine Schablone 36 mit einem Sieb an Schablonenaussparungen auf ein Substrat 40 aufgelegt und mittels eines Rakels 38 eine Paste 42, 44 mit funktionalen metallischen Komponenten und mit Bindemitteln durch die Schablonenaussparungen bzw. durch das Sieb (Siebdruck), gepresst. In Figur 9a sind dabei zwei Pastenanteile, eine Paste 42 mit der ersten Komponente und eine Paste 44 mit der zweiten Komponente, dargestellt. Die zweite Komponente entspricht dabei der amagnetischen zweiten Materialkomponente 8 des fertigen Magnetblechs 2, die erste Komponente entsprechende der ersten, magnetischen Komponente 6. Die Figur 9a ist insofern vereinfacht dargestellt, da mindestens zwei Vorgänge zum Aufbringen der Pasten 42 und 44 notwendig sind. Zuerst wird beispielsweise die Paste 42 aufgebracht, in einem zweiten Druckschritt die Paste 44. Dabei kann beispielsweise das Substrat von einer Schablone 36 zur nächsten Schablone 36 überführt werden, oder die Schablonen 36 werden während eines kontinuierlichen Produktionsprozesses sequenziell ausgetauscht.

Nachdem ein derartiger Grünkörper 52, der also die Rohpasten 42 und 44 umfasst, gedruckt ist, wird dieser einer ausführlichen Temperaturbehandlung unterzogen. Zunächst wird ein Trocknungsprozess 48 in einem Durchlaufofen 46 vorgenommen, bei dem organische Bestandteile aus den Pasten 42 und 44 sowie Lösungsmittel, wie Wasser ausgedampft werden bzw. thermisch zersetzt werden. In einer bevorzugten Form des Durchlaufofens 46 wird in einem zweiten Teil des Ofens 46 ein Sinterprozess 50 durchgeführt. Der Grünkörper 52 wird auf einem Förderband 54 in eine höhere Temperaturzone befördert, wobei der Sinterprozess 50 im Grünkörper 52 stattfindet.

Unter einem Sinterprozess wird dabei ein im Wesentlichen diffusionsgesteuerter Prozess zur Ausbildung eines monolithischen Materials verstanden. An Grenzflächen zwischen einzelnen Körnern bzw. metallischen Partikeln, die in den Pasten 42 und 44 enthalten sind, wird Material durch Diffusionsprozesse ausgetauscht. Der Sinterprozess unterscheidet sich von einem Schmelzprozess insbesondere dadurch, dass, wenn, dann nur in sehr begrenztem Maße eine flüssige Phase je nach Phasendiagramm der verwendeten Legierung auftritt. Es bleibt jedoch dabei jeweils die Formstabilität des Grünkörpers 52, der dabei in das Magnetblech-Halbzeug 1 übergeht, gewährleistet.

Das so erzeugte Magnetblech-Halbzeug 1 wird wie bereits erwähnt, ggf. durch einen Stanzprozess von dem ringförmigen Bereich 5 befreit und gemäß Figur 9c mittels eines Roboters 56 zu einem Magnetblechstapel 30 bzw. einem Blechpaket gestapelt. Die Figuren 9a - 9c sind dabei sehr schematisch dargestellt und umfassen bei Weitem nicht alle detaillierten Prozessschritte. Auch alternative Fertigungsverfahren, was die additive Fertigung gemäß Figur 9a sowie die Sinterprozess-Durchführung gemäß Figur 9b angeht, sind möglich. Zudem wird das Abtrennen des ringförmigen Bereiches 5 von dem Magnetblech-Halbzeug 1 zur Erstellung des Magnetblechs 2 in Figur 9 nicht dargestellt. Hierbei gibt es zwei Möglichkeiten: Entweder wird der ringförmige Bereich 5 durch einen Stanzprozess nach dem Sinterprozess 50 gemäß Figur 9b abgetrennt, oder der Bereich 5 wird nach dem Stapeln der Magnetblech-Halbzeuge 1 zu dem Blechpaket 30 abgedreht. Welches der beiden Verfahren hier zweckmäßig ist, hängt insbesondere von der Größe und der Beschaffenheit des herzustellenden Rotors 4 ab. Ggf. kann das Ausstanzen und das nachträgliche Feindrehen des Blechpaketes 30 kombiniert werden.

Auch das Einbringen der Entlastungsaussparungen 18 kann durch verschiedene Prozesse realisiert werden. Zum einen ist es möglich, bereits beim Schablonendruck 34 die Entlastungsaussparungen 18 in dem so entstehenden Grünkörper auszusparen. Dies ist durch ein entsprechendes Schablonendesign möglich. Andererseits ist es auch möglich, die Entlastungsaussparungen 18 abschließend gemeinsam mit dem ringförmig geschlossenen Bereich 5 auszustanzen. Die Notwendigkeit der Einbringung von Entlastungsaussparungen 18 hängt jedoch vom Gesamtdesign des Magnetblechs 2 bzw. des Blechpakets 30 oder des Rotors 4 ab und ist nicht in jedem Fall zwingend erforderlich.

### Bezugszeichenliste

- 1: Halbzeuge
- 2: Magnetblech
- 3: radial außerhalb liegende Flächen
- 4: Rotor
- 5: ringförmig geschlossener Bereich
- 6: erste Materialkomponente
- 8: zweite Materialkomponente
- 9: Grenzlinie
- 10: d-Achse
- 12: magnetischer Bereich
- 14: Magnetblech Mittelpunkt
- 16: Wellenbohrung
- 18: Entlastungsaussparungen
- 20: amagnetischer Materialbereich
- 22: konzentrischer Kreis
- 24: amagnetischer Bereich
- 26: q-Achsen
- 28: mechanische Spannungen
- 30: Blechpaket
- 32: Welle
- 34: Schablonendruck
- 36: Schablone
- 38: Rakel
- 40: Substrat
- 42: Paste Komponente 1
- 44: Paste Komponente 2
- 46: Durchlaufofen
- 48: Trockenprozess
- 50: Sinterprozess
- 52: Grünkörper
- 54: Förderband
- 56: Roboter

## Patentansprüche

1. Halbzeug eines rotationssymmetrischen Magnetblechs für einen Rotor einer elektrischen Maschine,
- das aus mindestens zwei Materialkomponenten zusammengesetzt ist,
- einer ersten Materialkomponente, die einen magnetischen Werkstoff umfasst und
- einer zweiten Materialkomponente die einen amagnetischen Werkstoff umfasst,
- wobei die zweite Materialkomponente diametral entlang einer Achse, einer sogenannten d-Achse verläuft, wobei mindestens zwei dieser d-Achsen vorgesehen sind,
- die wiederum mindestens vier magnetische Bereiche einschließen, die jeweils durch die magnetische erste Materialkomponente ausgebildet sind,
- die bezüglich eines Magnetblechmittelpunktes konkav bogenförmig verlaufen,
**dadurch gekennzeichnet, dass**
- radial außerhalb der magnetischen Bereiche liegende Flächen (3) ebenfalls durch das amagnetische Material gebildet sind und
- dass das Magnetblechhalbzeug von einem ringförmig geschlossenen Bereich (5) aus amagnetischen Material umgeben ist.

2. Halbzeug nach Anspruch 1, **dadurch gekennzeichnet, dass** die Anzahl der Magnetischen Bereiche 2*n der Anzahl der Achsen beträgt, wobei n eine natürliche Zahl ist.

3. Halbzeug nach Anspruch 1 oder 2, **dadurch gekennzeichnet, dass** das Halbzeug eine zentrale Wellenbohrung aufweist, wobei die Wellenbohrung (16) durchgehend von einem amagnetischer Materialbereich (24) umgeben ist.

4. Halbzeug nach einem der Ansprüche 1 bis 3, **dadurch gekennzeichnet, dass** die Winkelhalbierenden zweier benachbarter d-Achsen als q-Achsen bezeichnet sind und die weichmagnetischen Bereiche symmetrisch zu den q-Achsen ausgestaltet sind.

5. Halbzeug nach einem der vorhergehenden Ansprüche, **dadurch gekennzeichnet, dass** der ringförmig geschlossene Bereich aus amagnetischen Material radial unterschiedliche Dicken aufweist.

6. Halbzeug nach Anspruch 5, **dadurch gekennzeichnet, dass** der ringförmig geschlossene Bereich am Schnittpunkt mit der q-Achse eine größere Dicke als am Schnittpunkt mit der d-Achse aufweist.

7. Halbzeug nach einem der vorhergehenden Ansprüche, **dadurch gekennzeichnet, dass** eine Entlastungsaussparung vorgesehen ist, die von der d-Achse geschnitten wird und zu dieser symmetrisch ist.

8. Halbzeug nach einem der vorhergehenden Ansprüche, **dadurch gekennzeichnet, dass** die Sättigungsmagnetisierung des amagnetischen Werkstoffs der zweiten Materialkomponente weniger als 10 % der Sättigungsmagnetisierung des magnetischen Werkstoffs der ersten Materialkomponente beträgt.

9. Halbzeug nach einem der vorhergehenden Ansprüche, **dadurch gekennzeichnet, dass** die erste, weichmagnetische Materialkomponente (4) einen Eisenanteil aufweist, der höher als 95 Gew. %, insbesondere höher als 98 Gew. % ist.

10. Halbzeug nach einem der vorhergehenden Ansprüche, **dadurch gekennzeichnet, dass** die zweite, amagnetische Materialkomponente eine Eisen-Chrom-Legierung der tragenden Materialkomponente (10) einen Chromanteil zwischen 10 Gew. % und 20 Gew. %, insbesondere zwischen 12 Gew. % und 18 Gew. % beträgt.

11. Halbzeug nach Anspruch 10, **dadurch gekennzeichnet, dass** die Eisen-Chrom-Legierung der tragenden Materialkomponente (8) einen Nickelanteil zwischen 4 Gew. % und 10 Gew. %, insbesondere zwischen 6 Gew. % und 8 Gew. % beträgt.

12. Halbzeug nach Anspruch 10 oder 11, **dadurch gekennzeichnet, dass** die Eisen-Chrom-Legierung der tragenden Materialkomponente einen Molybdänanteil zwischen 2 Gew. % und 5 Gew. %, insbesondere zwischen 3 Gew. % und 4 Gew. % beträgt.

13. Halbzeug nach einem der Ansprüche 10 bis 12, **dadurch gekennzeichnet, dass** die Eisen-Chrom-Legierung der mechanisch tragenden Materialkomponente einen Wolframanteil zwischen 0,3 Gew. % und 1,2 Gew. %, insbesondere zwischen 0,5 Gew. % und 1 Gew. % beträgt.

14. Magnetblech für einen Rotor einer elektrischen Maschine umfassend ein Halbzeug nach einem der Ansprüche 1 bis 13, wobei der ringförmig geschlossenen Bereich aus amagnetischen Material entfernt ist.

15. Rotor einer elektrischen Maschine umfassend einen Stapel von Magnetblechen nach Anspruch 14.

16. Elektrische Maschine umfassend einen Rotor nach Anspruch 15.

17. Elektrische Maschine nach Anspruch 16, **dadurch gekennzeichnet, dass** die Maschine eine Reluktanzmaschine ist.
